Europäisches Patentamt

European Patent Office

Office européen des brevets

(19)

(11) **EP 0 908 486 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **C08G 81/00**, C09D 167/00, C09D 161/20

(21) Anmeldenummer: **98118725.5**

(22) Anmeldetag: **02.10.1998**

(54) **Wasserverdünnbare Harze, Verfahren zu ihrer Herstellung und ihre Verwendung**

Water-dilutable resins, process for their preparation and their use

Résines diluables dans l'eau, procédé pour leur préparation et leur utilisation

(84) Benannte Vertragsstaaten:
**AT BE CH DE DK ES FR GB IT LI NL SE**

(30) Priorität: **06.10.1997 AT 168297**

(43) Veröffentlichungstag der Anmeldung:
**14.04.1999 Patentblatt 1999/15**

(73) Patentinhaber: **Surface Specialties Austria GmbH
8402 Werndorf (AT)**

(72) Erfinder:
• **Tümmler, Peter Dr.
8010 Graz (AT)**
• **Hobisch, Gerald Dr.
8042 Graz (AT)**
• **Kasch, Hellmuth Dipl-Ing.
67071 Ludwigshafen (DE)**

(74) Vertreter: **Deckers, Hellmuth, Dr.
European Patent Attorney,
Bahnhofstrasse 26/A
55218 Ingelheim (DE)**

(56) Entgegenhaltungen:
EP-A- 0 062 786     EP-A- 0 154 835
GB-A- 728 079     US-A- 3 796 770
US-A- 3 887 641

**Beschreibung**

Die Erfindung betrifft als Pigmentpastenharze geeignete, nach Neutralisation wasserverdünnbare Harze erhältlich durch Umsetzung von Hartharzen auf Basis von Aldehyden oder Ketonen mit einer bindemittelartigen, nach Neutralisation wasserverdünnbaren Polycarboxylkomponente.

Hartharze auf Basis von Aldehyden oder Ketonen, in der Fachsprache in vereinfachter Form meist als Aldehyd- bzw. Ketonharze bezeichnet, sind seit langem bekannt. Diese Hartharze sind auf Grund ihrer spezifischen lacktechnischen Eigenschaften, wie helle Farbe, Verseifungs- und Vergilbungsbeständigkeit, gute Verträglichkeit mit anderen Lackbindemitteln und sehr gute Löslichkeit in polaren organischen Lösungsmitteln wichtige Rohstoffe für Nitrolacke und Alkydharzlacke. Auch in speziellen Anwendungsgebieten, beispielsweise als Basisharz für lösungsmittelhaltige Universalpigmentpasten, haben sie in den letzten Jahren eine große praktische Bedeutung erlangt.

Auf Grund der Forderung nach umweltfreundlichen Lacken haben Aldehyd- und Ketonharze aus der Sicht der Lackhersteller und Lackverbraucher jedoch einen wesentlichen Nachteil: sie sind unlöslich in Wasser.

Aus der Patentliteratur sind nur einige Versuche bekannt, stabile wäßrige Dispersionen auf Basis von Aldehyd- und Ketonharzen herzustellen, beispielsweise beschrieben in der DE-A 34 06 474, in der ein Schutzkolloid und spezielle Copolymerisate mitverwendet werden. In der GB-A 728,079 werden wasserdispergierbare Umsetzungsprodukte von Copolymeren von Styrol und Teilestern von polymerisierbaren ungesättigten Polycarbonsäuren mit wärmehärtenden Harzen beschrieben, wobei die letzteren insbesondere butylierte und nicht alkylierte Harnstoff-Formaldehydharze einschließen.

Aufgabe der vorliegenden Erfindung war es, durch die Bereitstellung von wasserverdünnbaren Harzen auf Basis von Aldehyd- oder Ketonharzen die Verwendbarkeit dieser Harze als Bindemittelkomponente, und speziell als Pigmentpastenharz, für wasserverdünnbare Lacke zu erweitern, ohne die Eigenschaften des zugrundeliegenden Lacksystems negativ zu beeinflussen. Somit ermöglicht die Erfindung die Herstellung von allgemein einsetzbaren, lösungsmittelarmen Pigmentzubereitungen.

Es wurde gefunden, daß es möglich ist, Aldehyd- und Ketonharze mit speziell ausgewählten bindemittelartigen, nach Neutralisation wasserverdünnbaren Polymeren ausgewählt aus Acrylatcopolymerisaten und Polyestern, die einen hohen Anteil an Carboxylgruppen aufweisen, sowie auch mit Carboxylgruppen-haltigen Komponenten, die durch Dimerisation oder Oligomerisation aus ungesättigten aliphatischen Carbonsäuren zugänglich sind, zumindest partiell zu kondensieren, wobei auf diese Weise gut wasserverdünnbare, als wäßrige Dispersion lagerstabile, neuartige Lackbindemittel erhalten werden. Für das beanspruchte Herstellungsverfahren geeignete Säuregruppen-haltige Polymere ("Polycarboxylkomponenten") des Acrylat-Copolymerisat-Typs werden beispielsweise in der AT 396 244 B 1 (≡ EP-A 0 496 079) und in der AT 388 921 (≡ EP-A 0 295 403) beschrieben.

Die Erfindung betrifft demnach nach Neutralisation wasserverdünnbare Harze **AB** mit einer Säurezahl von 25 bis 160 mg/g, erhältlich durch Umsetzung von Massenanteilen, jeweils bezogen auf die Summe der Massen der Feststoffe in der Reaktionsmischung, von

> **A** 30 bis 90 % mindestens eines säuregruppenhaltigen Polymeren, ausgewählt aus Polyestern, dimerisierten und oligomerisierten ungesättigten aliphatischen Carbonsäuren und Polymerisaten aus olefinisch ungesättigten Monomeren, jeweils mit einer Säurezahl von 30 bis 240 mg/g, und

> **B** 10 bis 70 % mindestens eines wasserunlöslichen Aldehyd- oder Ketonharzes, erhältlich durch Kondensation von Ketonen, Ketonen gemeinsam mit Aldehyden, Ketonen mit Harnstoff oder Aldehyden mit Harnstoff, mit einer Hydroxylzahl von 20 bis 300 mg/g, einem Erweichungspunkt von 60 bis 140 °C und einer zahlenmittleren molaren Masse von 500 bis 3000 g/mol,

wobei die Summe der Massenanteile von **A** und **B** stets 100 % ergibt.

Die Säurezahl ist gemäß DIN 53 402 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g".

Geeignete Komponenten **A** sind Säuregruppen-haltige Copolymerisate von olefinisch ungesättigten Monomeren mit einer Säurezahl des Copolymerisats von 30 bis 240 mg/g.

Bevorzugt werden solche Copolymerisate hergestellt, indem mindestens eines der eingesetzten olefinisch ungesättigten Monomeren, nämlich **A1,** mindestens eine Säuregruppe, bevorzugt eine Carboxylgruppe, trägt. Eines oder mehrere dieser Monomeren **A1** werden mit einem oder mehreren Monomeren **A2,** die frei von Säuregruppen sind, gemeinsam polymerisiert. Es ist auch möglich, während der Polymerisation die Zusammensetzung der Monomerenmischung zu verändern. Durch geeignete Wahl der Art und Menge der Monomeren läßt sich die gewünschte Säurezahl leicht einstellen.

Bevorzugt setzt man als Säuregruppen-haltige Monomere **A1** α,β-ungesättigte Carbonsäuren mit 3 bis 13 Kohlenstoffatomen oder Monoalkylester von α,β-ungesättigten aliphatischen Dicarbonsäuren mit 1 bis 20 Kohlenstoffatomen im Alkylrest ein. Es ist auch möglich, olefinisch ungesättigte Dicarbonsäuren wie Maleinsäure, Itaconsäure, Mesaconsäure, Citraconsäure und Dihydromuconsäure in unveresterter Form einzusetzen. Geeignete α,β-ungesättigte Carbonsäuren sind Acryl- und Methacrylsäure, Croton- und Isocrotonsäure, Vinylessigsäure, 3-Propylacrylsäure und 2-Octensäure. Geeignete Monoalkylester von α,β-ungesättigten Dicarbonsäuren sind Monomethyl-, Monoäthyl-, Monopropyl- und Monobutylester wie Monomethylmaleinat, Monäthylfumarat, Mesaconsäuremonobutylester und trans-3-Hexendisäuremonopropylester. Bevorzugt werden diese Säuregruppen-haltigen Monomeren in Massenanteilen von 10 bis 33 %, bezogen auf die Masse der Monomerenmischung, eingesetzt.

Die Monomeren **A2,** die frei von Säuregruppen sind, sind ausgewählt aus den Alkylestern einbasiger α,β-ungesättigter aliphatischer Carbonsäuren mit 3 bis 7 Kohlenstoffatomen in der Säurekomponente und 1 bis 20, bevorzugt 1 bis 12 Kohlenstoffatomen in der Alkylkomponente; den Dialkylestern von α,β-ungesättigten aliphatischen Dicarbonsäuren mit 4 bis 8 Kohlenstoffatomen in der Säurekomponente und 1 bis 20, bevorzugt 1 bis 12 Kohlenstoffatomen in der Alkylkomponente; den Nitrilen der genannten Säuren; den Hydroxyalkylestern der genannten einbasigen α,β-ungesättigten aliphatischen Carbonsäuren mit 3 bis 7 Kohlenstoffatomen in der Säurekomponente und 2 bis 20 Kohlenstoffatomen in der Hydroxyalkylkomponente, wobei auch Oligo-oxyalkylenglykol-monoester mit einem zahlenmittleren Polymerisationsgrad von 2 bis 50 eingeschlossen sind, deren Alkylengruppen aus den Äthylen- und 1,2-Propylengruppen sowie deren Mischungen ausgewählt sind; den Vinylaromaten wie Styrol und Vinyltoluol sowie den Vinylestern gesättigter aliphatischer linearer und verzweigter Monocarbonsäuren mit 2 bis 20 Kohlenstoffatomen wie Vinylacetat, Vinylpropionat und Vinylversatat. Die Monomeren **A2** werden in Massenanteilen von 67 bis 90 %, bezogen auf die Masse der Monomerenmischung aus **A1** und **A2** eingesetzt.

Gegebenenfalls können auch als weitere Monomere **A3** einfach oder mehrfach ungesättigte Fettsäuren mit 14 bis 30 Kohlenstoffatomen oder deren Ester mit aliphatischen Alkoholen mit 1 bis 20 Kohlenstoffatomen in der Alkylgruppe eingesetzt werden. Beispiele für geeignete Monomeren **A3** sind Ölsäure, Linolsäure, Linolensäure, Ricinensäure sowie Mischungen solcher Säuren wie Saflorölfettsäure, Sojaölfettsäure, Leinsamenölfettsäure, Baumwollsamenölfettsäure, Sonnenblumenölfettsäure und Tallölfettsäure sowie deren Ester. Der Massenanteil dieser Monomeren **A3** in der Monomermischung aus **A1, A2** und **A3** beträgt dann 0 bis 50 %.

Die Polymerisation der Monomerenmischung erfolgt nach den bekannten Methoden, vorzugsweise durch radikalisch ausgelöste Polymerisation. Als Initiatoren können die bekannten Peroxide, Persäuren und deren Derivate, Azoverbindungen sowie auch die als Redox-Katalysatoren bekannten Paare von Oxidations- und Reduktionsmitteln, auch gemeinsam mit Salzen von Übergangsmetallen wie Eisen, Cer oder Mangan eingesetzt werden. Die Polymerisation kann in Lösung, Emulsion oder auch in Masse erfolgen.

Die Komponente A kann auch ein Carboxylgruppen-haltiger Polyester mit einer Säurezahl von 30 bis 240 mg/g sein, erhältlich durch Kondensation aus

**A4** zweiwertigen aliphatischen linearen, verzweigten oder cyclischen Alkoholen mit 2 bis 20 Kohlenstoffatomen, und

**A5** zweibasigen aliphatischen oder aromatischen Carbonsäuren.

Dabei kann ein Stoffmengenanteil von bis zu 10 % der Komponente **A4** ersetzt sein durch drei-oder höherwertige aliphatische lineare, verzweigte oder cyclische Alkohole mit drei bis 20 Kohlenstoffatomen. Ebenso kann ein Stoffmengenanteil von bis zu 10 % der Komponente **A5** ersetzt sein durch eine drei-oder mehrbasige aliphatische oder aromatische Carbonsäure. Die Polyester können auch unter Mitverwendung von Massenanteilen von bis zu 15 % von Hydroxycarbonsäuren **A6** kondensiert werden, die jeweils mindestens eine Hydroxylgruppe und mindestens eine Carboxylgruppe aufweisen.

Als Alkohole **A4** können beispielsweise bevorzugt Äthylenglykol, 1,2- und 1,3-Propylenglykol, 1,4-Butandiol, Neopentylglykol, 1,6-Hexandiol, 1,2- und 1,4-Dihydroxycyclohexan, 3,4-Diäthyl-3,4-hexandiol und 1,4-Bis(hydroxymethyl)cyclohexan jeweils einzeln oder im Gemisch eingesetzt werden. Besonders bevorzugt werden Glykol, Neopentylglykol und 1,2-Propylenglykol.

Als zweibasige Carbonsäuren **A5** werden bevorzugt Adipinsäure, Bernsteinsäure, Sebacinsäure, Cyclohexandicarbonsäure, Phthalsäure, Isophthalsäure und Terephthalsäure, Sulfonyldibenzoesäure, Diphenylätherdicarbonsäure und die isomeren Naphthalindicarbonsäuren eingesetzt, sowie dimere Fettsäuren, die durch katalysierte Dimerisierung ungesättigter Fettsäuren (z.B. Tallöl-Fettsäure) als Gemisch aus acyclischen und cyclischen Dicarbonsäuren gewonnen werden. Auch ein- oder mehrfach ungesättigte aliphatische Dicarbonsäuren wie Maleinsäure, Fumarsäure, Itaconsäure, Citraconsäure und Mesaconsäure oder Sorbinsäure können eingesetzt werden. Besonders bevorzugt werden Adipinsäure, Maleinsäure und die isomeren Phthalsäuren, jeweils einzeln oder im Gemisch.

Geeignete Hydroxycarbonsäuren **A6** sind Milchsäure, Dimethylolpropionsäure, Weinsäure, Traubensäure, Glykolsäure, Dihydroxybemsteinsäure und Äpfelsäure. Auch diese Komponente kann Mischungen mehrerer der geeigneten Stoffe enthalten.

Die Polyester werden in bekannter Weise durch Polykondensation der Edukte **A4** bis **A6** oder ihrer esterbildenden Derivate (wie Methylester oder Halogenide oder Anhydride der Säuren oder Acetate der Alkohole) in Masse oder in Lösung erhalten. Zur Beschleunigung der Reaktion können die bekannten Umesterungs-Katalysatoren eingesetzt werden.

Die ebenfalls als Komponente **A** geeigneten dimerisierten und oligomerisierten ungesättigten aliphatischen Carbonsäuren werden durch Di- oder Oligomerisation von ein- oder mehrfach ungesättigten Fettsäuren mit 6 bis 30 Kohlenstoffatomen gewonnen. Bevorzugt sind die durch Katalyse mit Metalloxiden gewonnenen Gemische von linearen verzweigten und cyclischen Di- und Trimerisaten von ungesättigten Fettsäuren mit 16 bis 24, besonders auch mit 18 Kohlenstoffatomen.

Als Komponente B eignen sich Aldehyd- und Ketonharze, erhältlich durch Kondensation von Ketonen, Ketonen gemeinsam mit Aldehyden, Ketonen mit Harnstoff oder Aldehyden mit Harnstoff, mit einer Hydroxylzahl von 20 bis 300 mg/g, einem Erweichungspunkt von 60 bis 140 °C und einer zahlmittleren molaren Masse von 500 bis 3000 g/mol. Diese Harze werden üblicherweise durch alkalikatalysierte Kondensation hergestellt. Geeignete Herstellungsverfahren sind in den DRP 337 993, DRP 357 091, DRP 511 092, DE 0 749 836, DRP 339 107 und DE-A 28 31 613 beschrieben. Geeignete Ketonharze leiten sich ab von cycloaliphatischen Ketonen wie Cyclohexanon oder dessen Derivaten wie Methylcyclohexanon und tert.Butyl-Cyclohexanon. Die Harze lassen sich aus diesen Ketonen oder deren Gemischen nach den bekannten Verfahren erhalten. Weitere geeignete Harze werden durch Kondensation von Ketonen in Gegenwart von Harnstoff, substituierten Harnstoffen oder deren Derivaten wie z. B. 2-Imidazolidinon erhalten. Ebenso geeignet sind Kondensationsprodukte aus Ketonen und Aldehyden, bevorzugt cycloaliphatischen Ketonen und Formaldehyd oder dessen Oligomeren, ebenfalls optional in Gegenwart von Harnstoff oder dessen Derivaten.

Die erfindungsgemäßen Harze **AB** sind erhältlich durch Umsetzung der Komponenten **A** und **B** bei erhöhter Temperatur, vorzugsweise bei 100 bis 220 °C, vorzugsweise in der Schmelze ohne Zusatz eines Lösungsmittels, wobei jedoch gegebenenfalls ein unter den Reaktionsbedingungen inertes Lösungsmittel in Massenanteilen von bis zu 20 %, bezogen auf die Summe der Massen der Komponenten **A** und **B** sowie des Lösungsmittels, zugegeben werden kann. Die Umsetzung wird solange vorgenommen, bis die Säurezahl des Kondensationsprodukts aus **A** und **B** einen Wert von 25 bis 160 mg/g erreicht hat. Bei der Kondensationsreaktion werden geringe Mengen an Wasser gebildet, die bei der Reaktionstemperatur entweichen. Man kann das Wasser bevorzugt auch durch azeotrope Destillation entfernen, indem ein Lösungsmittel eingesetzt wird, das nicht mit Wasser mischbar ist und mit Wasser ein Azeotrop bildet.

Die so hergestellten Harze **AB** werden, gegebenenfalls nach Zugabe von geringen Mengen eines wasserverdünnbaren Lösunsgmittels, mit wäßrigen Alkalien, bevorzugt Ammoniaklösungen oder Aminen, neutralisiert. Die Menge an Alkalien wird dabei so gewählt, daß mindestens die Hälfte der Säuregruppen des Harzes neutralisiert ist. Bevorzugt wird jedoch vollständig neutralisiert. Anschließend wird auf einen Festkörper-Massenanteil von bevorzugt 20 bis 60 %, besonders bevorzugt von 30 bis 50 %, durch Zugabe von Wasser weiter verdünnt. Es ist auch möglich, die Konzentration des Neutralisationsmittels so einzustellen, daß Verdünnung und Neutralisation gleichzeitig vorgenommen werden. Man erhält so eine wäßrige Lösung oder Dispersion des neutralisierten Harzes.

Die erfindungsgemäß hergestellten Harze **AB** sind nach Neutralisation wasserverdünnbar. Sie lassen sich beispielsweise zur Herstellung von wasserverdünnbaren Beschichtungsmitteln einsetzen. Sie sind ausgezeichnet geeignet als Pastenharze zur Herstellung von lösungsmittelarmen und lösungsmittelfreien Pigmentpasten. Sie weisen ein hohes Pigmentbindevermögen auf, sind lagerstabil und verändern in den daraus hergestellten Pigmentpasten ihre Viskosität während der Lagerung nicht oder nicht wesentlich. Diese Pigmentpasten lassen sich leicht in wäßrige Bindemittel einarbeiten. Gegenüber direkt pigmentierten Lacken zeigt sich keine negative Beeinflussung der Lackeigenschaften.

Die folgenden Beispiele erläutern die Erfindung, ohne sie in ihrem Umfang zu beschränken.

In den nachfolgenden Beispielen bedeuten ebenso wie im vorhergehenden Text alle Angaben mit der Einheit "%" Massenanteile, soweit nicht anders angegeben. "Teile" (abgekürzt "Tle") sind stets Massenteile. Konzentrationsangaben in "%" sind Massenanteile des gelösten Stoffes in der Lösung.

Die in den Beispielen genannte früher so bezeichnete "Grenzviskositätszahl", nach DIN 1342, Teil 2.4, "Staudinger-Index" $J_g$ genannt, ist der Grenzwert der Staudinger-Funktion $J_v$ bei abnehmender Konzentration und Schubspannung, wobei $J_v$ die auf die Massenkonzentration $\beta_B = m_B / V$ des gelösten Stoffes B (mit der Masse $m_B$ des Stoffes im Volumen $V$ der Lösung) bezogene relative Viskositätsänderung $\eta_r - 1 = (\eta - \eta_s) / \eta_s$ ist, also $J_v = (\eta_r - 1) / \beta_B$. Dabei bedeutet $\eta$ die Viskosität der untersuchten Lösung und $\eta_s$ die Viskosität des reinen Lösungsmittels. Die üblicherweise für $J$ verwendete Einheit ist dl/g.

**Beispiele**

*1 Herstellung der Copolymerisate* (1) *bis* (4) *und der Polyester* (5) *und* (6)

1.1 Herstellung des Copolymerisats (1)

30 Tle Leinölfettsäure und 5 Tle Xylol wurden auf 135 bis 140 °C erwärmt. Bei dieser Temperatur wurde innerhalb 6 bis 8 Stunden gleichzeitig eine Mischung aus 32 Tlen Isobutylmethacrylat, 6 Tlen tert.-Butylperbenzoat, 1 Tl Dibenzoylperoxid (50 %ig auf Dicyclohexylphthalat als Träger) und 5 Tlen Xylol gleichmäßig zugegeben. Nach Beendigung der Zugabe wurde die Reaktionstemperatur beibehalten, bis eine Rückstandsbestimmung einen mindestens 95 %igen Polymerisationumsatz ergab. Das Copolymerisat wies eine Säurezahl von 209 mg/g und einen Staudinger-Index (in Dimethylformamid als Lösungsmittel) von 5,5 dl/g auf.

1.2 Herstellung der Copolymerisate (2) bis (4)

Die Copolymerisate wurden in bekannter Weise durch Lösungspolymerisation in Isopropanol entsprechend einem berechneten Festkörper-Massenanteil von 50 % hergestellt. Die Mengenverhältnisse und Kennzahlen sind in der Tabelle 1 zusammengefaßt.

1.3 Herstellung der Polyester (5) und (6)

Aus Butandiol und Adipinsäure wurde durch Polykondensation in der Schmelze ein Polyester (5) mit einer Säurezahl von 192 mg/g hergestellt.

Aus Neopentylglykol und einer Mischung aus gleichen Stoffmengen-Anteilen Phthalsäureanhydrid und Maleinsäureanhydrid sowie einem Massenanteil von 5 % in der Eduktmischung von Dimethylolpropionsäure wurde durch Kondensation in der Schmelze ein Polyester (6) mit einer Säurezahl von 217 mg/g hergestellt.

Tabelle 1

|  |  | Komponente | | | |
|  |  | (1) | (2) | (3) | (4) |
|-----|------------------|------|------|------|------|
| (A2) | Äthylacrylat | - | - | - | 25 |
|  | Butylacrylat | - | - | - | 30 |
|  | 2-Äthylhexylacrylat | - | 25 | 30 | - |
|  | Methylmethacrylat | - | - | - | 30 |
|  | Isobutylmethacrylat | 32 | 18 | 27 | - |
|  | Styrol | - | 26 | 18,5 | - |
|  | Vinyltoluol | 6 | - | - | - |
| (A1) | Acrylsäure | - | 31 | - | 15 |
|  | Methacrylsäure | 21 | - | 24,5 | - |
| (A3) | Leinölfettsäure | 41 | - | - | - |
|  | Säurezahl in mg/g | 209 | 241 | 160 | 117 |

Die bei den eingesetzten Stoffen angegebenen Zahlen sind Massenanteile in %, die sich jeweils auf 100 % ergänzen.

*2 Herstellung der Pigmentpastenharze PH1 bis PH10*

Beispiele 2.1 bis 2.7

Die Komponenten (A) und (B) wurden in den Mengenverhältnissen gemäß Tabelle 2 in ein geeignetes Reaktionsgefäß gefüllt. Der Ansatz wurde unter Rühren allmählich auf eine Kreislauftemperatur von 200 °C gebracht und so lange bei dieser Temperatur gehalten, bis die angegebene Säurezahl erreicht war. Nach dem Entfernen des Lösemittels wurde der Ansatz mit Äthylenglykolmonobutyläther auf einen Festkörper-Massenanteil von 87 % eingestellt und bei 50 °C mit einer verdünnten wäßrigen Ammoniaklösung emulgiert. Die Ammoniak- und Wassermenge wurde so gewählt, daß ein pH-Wert der Emulsion von 8,2 bis 8,4 und ein Festkörper-Massenanteil von 40 % resultiert. Die Harzlösungen waren milchige bis transparente Flüssigkeiten.

Tabelle 2

| (alle Mengenangaben sind Massenanteile der Komponenten im Feststoff) | | | | | | | |
|---|---|---|---|---|---|---|---|
| Beispiel | 2.1 | 2.2 | 2.3 | 2.4 | 2.5 | 2.6 | 2.7 |
| Pigmentpastenharz | PH1 | PH2 | PH3 | PH4 | PH5 | PH6 | PH7 |
| Komponente (A) | 60**(1)** | 40**(2)** | 80**(3)** | 90**(4)** | 50**(2)** | 70**(3)** | 70**(1)** |
| Komponente (B) | 40**(B3)** | 60**(B2)** | 20**(B1)** | 10**(B3)** | 50**(B1)** | 30**(B2)** | 30**(B1)** |
| Säurezahl in mg/g | 82 | 41 | 110 | 95 | 35 | 74 | 103 |

**(B1):** ® LAROPAL A81: Aldehyd-Harz (BASF)

**(B2):** ® LAROPAL A101: Aldehyd-Harnstoff-Harz (BASF)

**(B3):** ® LAROPAL K80: Keton-Harz (BASF)

Beispiele 2.8 bis 2.10

In ähnlicher Weise wurden durch Kondensation von 45 Teilen des Polyesters (**5**) und 55 Teilen eines Harzes aus aliphatischen Aldehyden und Harnstoff mit einer Erweichungstemperatur von 80 bis 90 °C und einer Säurezahl von ca. 1,5 mg/g ( ®Laropal A 81) ein Pigmentpastenharz PH8 mit einer Säurezahl von 52 mg/g, und durch Kondensation von 60 Teilen des Polyesters (**6**) mit 40 Teilen eines Harzes aus aliphatischen Aldehyden und Harnstoff mit einer Erweichungstemperatur von 95 bis 100 °C und einer Säurezahl von ca. 1 mg/g ein Pigmentpastenharz PH9 mit einer Säurezahl von 68 mg/g hergestellt. Aus 50 Tlen einer Dimer-Fettsäure mit im Mittel 36 Kohlenstoffatomen und einer Säurezahl von ca. 190 mg/g (®Pripol 1017 der Unichema) und 50 Tlen eines Harzes aus aliphatischen Aldehyden und Harnstoff mit einer Erweichungstemperatur von 80 bis 90 °C und einer Säurezahl von ca. 1,5 mg/g (®Laropal A 81) wird durch Kondensation ein Pastenharz PH10 mit einer Säurezahl von 70 mg/g hergestellt.

### 3 Lacktechnische Prüfung der Pigmentpastenharze PH1 bis PH10

Gemäß den Angaben in Tabelle 3 wurden die entsprechenden Mengen der jeweiligen Pigmente in folgender Pigmentpastenlösung auf der Perlmühle dispergiert und anschließend einer Prüfung ihrer Lagerfähigkeit unterworfen.

| | |
|---|---|
| 250 | Tle Pigmentpastenharz, 40 % in Wasser |
| 20 | Tle Additol® VXW 6213 (Netzmittel) |
| 2 | Tle Additol® VXW 6210 (Entschäumer) |
| 3 | Tle Additol® XL 297 (Antihautmittel für lufttrocknende Lackbindemittel) |
| 100 | Tle Wasser |
| 3̄7̄5̄ | Tle Pigmentpasten-Zubereitung |

Tabelle 3

| Pigment | | Pigment-pastenharz | Tle Pigment auf 100 Tle PH | Viskosität in mPa·s | Lager-test |
|---|---|---|---|---|---|
| P1 | ® Hostapermgelb H4G | PH1 | 175 | 1188 | i.O. |
| P2 | ® Novopermgelb H10GL | PH2 | 125 | 470 | i.O. |
| P3 | ® Novopermorange HL70 | PH7 | 275 | 707 | i.O. |
| P4 | ® Permanent orange RL70 | PH3 | 200 | 1102 | i.O. |

Tabelle 3 (fortgesetzt)

| Pigment | | Pigment-pastenharz | Tle Pigment auf 100 Tle PH | Viskosität in mPa·s | Lager-test |
|---|---|---|---|---|---|
| P5 | ® Hostaperm rosa E | PH2 | 115 | 1714 | i.O. |
| P6 | ® Hostaperm rot E5B | PH5 | 125 | 895 | i.O. |
| P7 | ® Novoperm rot F5RK | PH6 | 150 | 774 | i.O. |
| P8 | ® Hostaperm violett RL spez. | PH2 | 125 | 417 | i.O. |
| P9 | ® Hostaperm blau AFL | PH6 | 150 | 325 | i.O. |
| P10 | ® Hostaperm grün 8 G | PH5 | 250 | 455 | i.O. |
| P11 | ® KRONOS 2310 | PH1 | 500 | 975 | i.O. |
| P12 | ® Bayferrox 130BM | PH4 | 500 | 1900 | l.Bs. |
| P13 | ® Printex U | PH7 | 52,5 | 570 | i.O. |
| P14 | ® Paliotol gelb L2140 HB | PH2 | 150 | 543 | i.O. |
| P15 | ® Paliotol rot L3550HB | PH5 | 200 | 380 | i.O. |
| P16 | ® Heliogenblau L6700F | PH2 | 150 | 450 | i.O. |
| P17 | ® Heliogengrün L9361 | PH5 | 250 | 575 | i.O. |
| P18 | ® Hostaperm violett RL spez. | PH8 | 125 | 463 | i.O. |
| P19 | ® Paliotol gelb L2140 HB | PH9 | 150 | 521 | i. O. |
| P20 | ® Heliogengrün L9361 | PH10 | 250 | 560 | i. zO. |
| Pigment der Fa. Hoechst AG (1-10,18) Pigment der Fa. Kronos Titan (11) Pigment der Fa. Bayer AG (12) Pigment der Fa. Degussa AG (13) Pigment der Fa. BASF AG (14-17,19,20) Lagertest: Lagerung bei Raumtemperatur während 6 Monaten i.O.: in Ordnung; l.Bs.: leichter Bodensatz | | | | | |

Es läßt sich erkennen, daß die erfindungsgemäß hergestellten Pastenharze lagerstabil sind und ein hohes Pigment-Bindevermögen aufweisen.

### 4 Lackprüfung

Mit der Pigmentpaste P3 und der Pigmentpaste P11 wurden mit unterschiedlichen wäßrigen Bindemitteln in dem in Tabelle 4 angegebenen Verhältnis der Masse des Pigments ($m_P$) zur Masse des Bindemittels ($m_B$) Lacke hergestellt.

Tabelle 4

| Lack Nr. | L1 | L2 | L3 | L4 | L5 | L6 |
|---|---|---|---|---|---|---|
| Bindemittel | a | b | c | d | a | d |
| Pigmentpaste | P11 | P3 | P3 | P11 | P3 | P3 |

Tabelle 4   (fortgesetzt)

| Lack Nr. | L1 | L2 | L3 | L4 | L5 | L6 |
|---|---|---|---|---|---|---|
| $m_P$ / $m_B$ | 1 : 1 | 0,2 : 1 | 0,2 : 1 | 1 : 1 | 0,2 : 1 | 0,2 : 1 |

Bindemittel a ist ein oxidativ trocknendes, acrylmodifiziertes Alkydharz in wäßriger Emulsionsform (®Resydrol AY 586 w, Vianova Resins),

Bindemittel b ist ein oxidativ trocknendes, ammoniakneutralisiertes Acryl-Alkyd-Hybridsystem in wäßriger Emulsionsform (® Resydrol VAY 6278 w, Vianova Resins),

Bindemittel c ist eine wäßrige Polyurethandispersion (®Daotan VTW 1252, Vianova Resins).

Bindemittel d ist ein epoxidharzmodifiziertes, nicht trocknendes Alkydharz, das nach Neutralisation mit Aminen wasserverdünnbar ist (®Resydrol AX 246, Vianova Resins).

Mit diesen Lacken wurden Stahlplatten in einer Naßfilmdicke von 150 μm beschichtet. An den Testplatten der oxidativ trocknenden Lacke wurden Glanz und Schleier mit einem Gonioreflektometer der Fa. BYK nach 48 Stunden Lagerung bei Raumtemperatur (RT) bestimmt, die Pendelhärte nach König (DIN 53157) nach ein- bzw. siebentägiger Lagerung bei Raumtemperatur nach Applikation. Die mechanische Beständigkeit der Beschichtungen wurde an einer Trockenschichtdicke von 30 bis 35 μm nach 7 d Lagerung bei RT durch Tiefungsprüfung nach DIN EN ISO 1520 und durch Schlagprüfung nach ASTM D 2794 geprüft, die Korrosionsanfälligkeit durch Wasserlagerung bei 40 °C nach ISO 2812 T2 und durch die Feuchtschrankbeständigkeit (Tropentest) nach DIN 53210.

Die Testplatten auf Basis der Einbrenntype (AX 246) wurden nach der Applikation 10 Minuten abgelüftet, 10 Minuten bei 80 °C getrocknet und dann 20 Minuten bei 130 °C eingebrannt. Eine Stunde nach dem Einbrennen wurden die Prüfungen durchgeführt.

Als Vergleich wurde jeweils eine Stahlplatte benutzt, die mit einem direkt pigmentierten Vergleichslack V1 bis V6 (ohne Pastenharz) desselben Bindemittels beschichtet war. Die Ergebnisse der Lackprüfung sind in der Tabelle 5 zusammengefaßt.

Tabelle 5

| Prüflack | Glanz (20 °) | Schleier | Pendelhärte in s | | mechanischer Test | Korrosionstest |
|---|---|---|---|---|---|---|
| | | | nach 1 d | nach 7 d | | |
| L1 | 66 | 2,18 | 22 | 39 | 0 | + |
| V1 | 67 | 2,25 | 22 | 39 | | |
| L2 | 61 | 2,14 | 39 | 37 | 0 | 0 |
| V2 | 53 | 2,11 | 30 | 32 | | |
| L3 | 73 | 2,38 | 50 | 110 | 0 | 0 |
| V3 | 68 | 2,32 | 50 | 72 | | |
| L4 | 82 | 2,09 | 156 | 148 | - | 0 |
| V4 | 84 | 2,17 | 157 | 148 | | |
| L5 | 81 | 2,68 | 9 | 44 | 0 | 0 |
| V5 | 80 | 2,61 | 11 | 37 | | |
| L6 | 87 | 2,33 | 167 | 171 | - | 0 |
| V6 | 88 | 2,34 | 170 | 171 | | |

0: kein Unterschied zwischen den L- und V-Proben

+: L-Probe ist bis zu 10 % besser im Test als V-Probe
++: L-Probe ist über 10 % besser im Test als V-Probe

-: L-Probe ist bis zu 10 % schlechter im Test als V-Probe
--: L-Probe ist über 10 % schlechter im Test als V-Probe

Aus diesen Ergebnissen ist zu erkennen, daß es möglich ist, mit den erfindungsgemäßen Pastenharzen eine Reihe verschiedenster lösemittelarmer Pigmentpasten herzustellen und mit ausgezeichnetem Ergebnis Lacke zu pigmentieren, ohne das anwendungstechnische Eigenschaftsprofil der Lacke negativ zu beeinflussen.

**Patentansprüche**

1. Nach Neutralisation wasserverdünnbare Harze **AB** mit einer Säurezahl von 25 bis 160 mg/g, erhältlich durch Umsetzung von Massenanteilen, jeweils bezogen auf die Summe der Massen der Feststoffe in der Reaktionsmischung, von

   **A** 30 bis 90 % mindestens eines säuregruppenhaltigen Polymeren, ausgewählt aus Polyestern, dimerisierten und oligomerisierten ungesättigten aliphatischen Carbonsäuren und Polymerisaten aus olefinisch ungesättigten Monomeren, jeweils mit einer Säurezahl von 30 bis 240 mg/g, und

   **B** 10 bis 70 % mindestens eines wasserunlöslichen Aldehyd- oder Ketonharzes, erhältlich durch Kondensation von Ketonen, Ketonen gemeinsam mit Aldehyden, Ketonen mit Harnstoff oder Aldehyden mit Harnstoff, mit einer Hydroxylzahl von 20 bis 300 mg/g, einem Erweichungspunkt von 60 bis 140 °C und einer zahlenmittleren molaren Masse von 500 bis 3000 g/mol,

   wobei die Summe der Massenanteile von **A** und **B** stets 100 % ergibt.

2. Wäßrige Lösung oder Dispersion eines Harzes nach Anspruch 1, erhältlich durch Verdünnen des neutralisierten Harzes **AB** mit Wasser auf einen Feststoff-Massenanteil in der wäßrigen Lösung von 30 bis 50 %.

3. Harze nach Anspruch 1, **dadurch gekennzeichnet, daß** als Komponente **A** ein Carboxylgruppen-haltiges Copolymerisat aus olefinisch ungesättigten Monomeren eingesetzt wird, wobei mindestens eines der Monomeren Carboxylgruppen enthält.

4. Harze nach Anspruch 1, **dadurch gekennzeichnet, daß** als Komponente **A** ein Copolymerisat aus Massenanteilen in der Monomerenmischung von

   **A1** 10 bis 33 % α,β-ungesättigten aliphatischen Carbonsäuren mit 3 bis 13 Kohlenstoffatomen oder Monoalkylestern von α,β-ungesättigten aliphatischen Dicarbonsäuren mit 1 bis 20 Kohlenstoffatomen im Alkylrest,
   **A2** 67 bis 90 % eines oder mehrerer olefinisch ungesättigter Monomerer, die frei von Säuregruppen sind, ausgewählt aus Acryl-und Methacrylsäure-Estern aliphatischer Alkohole mit 1 bis 12 Kohlenstoffatomen im Alkylrest, Styrol, Vinyltoluol, Acryl- und Methacrylnitril, Hydroxyalkyl(meth)acrylaten mit 2 bis 20 Kohlenstoffatomen im Alkylrest und Dialkylestern von α,β-ungesättigten aliphatischen Dicarbonsäuren mit 1 bis 20 Kohlenstoffatomen im Alkylrest, und
   **A3** 0 bis 50 % ein-oder mehrfach ungesättigten Fettsäuren mit 14 bis 30 Kohlenstoffatomen oder deren Estern

   eingesetzt wird, wobei die Summe der Massenanteile von **A1, A2** und **A3** in der Monomerenmischung stets 100 % ergibt.

5. Harze nach Anspruch 1, **dadurch gekennzeichnet, daß** die Komponente **A** ein Carboxylgruppen-haltiger Polyester ist, erhältlich durch Kondensation aus

   **A4** zweiwertigen aliphatischen linearen, verzweigten oder cyclischen Alkoholen mit 2 bis 20 Kohlenstoffatomen, und
   **A5** zweibasigen aliphatischen oder aromatischen Carbonsäuren.

6. Harze nach Anspruch 5, **dadurch gekennzeichnet, daß** ein Stoffmengenanteil von bis zu 10 % der Komponente **A4** ersetzt ist durch drei- oder höherwertige aliphatische lineare, verzweigte oder cyclische Alkohole mit drei bis 20 Kohlenstoffatomen.

7. Harze nach Anspruch 5, **dadurch gekennzeichnet, daß** ein Stoffmengenanteil von bis zu 10 % der Komponente **A5** ersetzt ist durch eine drei-oder mehrbasige aliphatische oder aromatische Carbonsäure.

8. Harze nach Anspruch 5, **dadurch gekennzeichnet, daß** die Polyester unter Mitverwendung von Massenanteilen von bis zu 15 % von Hydroxycarbonsäuren kondensiert werden, die jeweils mindestens eine Hydroxylgruppe und mindestens eine Carboxylgruppe aufweisen.

9. Harze nach Anspruch 1, **dadurch gekennzeichnet, daß** die Komponente **A** ein Dimerisat oder Oligomerisat aus ein-oder mehrfach ungesättigten aliphatischen Carbonsäuren mit 6 bis 30 Kohlenstoffatomen ist.

10. Verfahren zur Herstellung von Harzen nach Anspruch 1, **dadurch gekennzeichnet, daß** die Komponenten **A** und **B** bei einer Temperatur von 100 bis 250 °C umgesetzt werden, bis eine Säurezahl von 25 bis 160 mg/g erreicht ist, gegebenenfalls ein wasserverdünnbares Lösungsmittel zugegeben wird und die erhaltene Lösung mit einer wäßrigen Lösung von Alkalihydroxiden, Ammoniak oder Aminen ganz oder teilweise neutralisiert wird.

11. Verfahren zur Herstellung von Harzen nach Anspruch 10, **dadurch gekennzeichnet, daß** während der Umsetzung der Komponenten **A** und **B** das gebildete Wasser durch azeotrope Destillation entfernt wird.

12. Verwendung von Harzen nach Anspruch 1 zur Herstellung von wasserverdünnbaren Beschichtungsmitteln.

13. Verwendung von Harzen nach Anspruch 1 zur Herstellung von Pigmentpastenharzen, die gemeinsam mit wäßrigen Bindemitteln zur Herstellung von wäßrigen Lacken genutzt werden können.

## Claims

1. Resins **AB** which are dilutable in water following neutralization and have an acid number of from 25 to 160 mg/g, obtainable by reacting mass fractions, based in each case on the sum of the masses of the solids in the reaction mixture, of

   **A** from 30 to 90% of at least one acid-functional polymer selected from polyesters, dimerized and oligomerized unsaturated aliphatic carboxylic acids and polymers of olefinically unsaturated monomers, each having an acid number of from 30 to 240 mg/g, and

   **B** from 10 to 70% of at least one water-insoluble aldehyde resin or ketone resin obtainable by condensing ketones, ketones together with aldehydes, ketones with urea or aldehydes with urea, having a hydroxyl number from 20 to 300 mg/g, a softening point of from 60 to 140°C and a number-average molar mass of from 500 to 3000 g/mol,

   the sum of the mass fractions of **A** and **B** always being 100%.

2. Aqueous solution or dispersion of a resin according to Claim 1, obtainable by diluting the neutralized resin **AB** with water to a mass solids content in the aqueous solution of from 30 to 50%.

3. Resins according to Claim 1, **characterized in that** a carboxyl-containing copolymer composed of olefinically unsaturated monomers is employed as component **A**, at least one of the monomers comprising carboxyl groups.

4. Resins according to Claim 1, **characterized in that** a copolymer composed of mass fractions in the monomer mixture of

   **A1** from 10 to 33% of $\alpha,\beta$-unsaturated aliphatic carboxylic acids having 3 to 13 carbon atoms or monoalkyl esters of $\alpha,\beta$-unsaturated aliphatic dicarboxylic acids having 1 to 20 carbon atoms in the alkyl radical,
   **A2** from 67 to 90% of one or more olefinically unsaturated monomers which are free of acid groups, selected from esters of acrylic and methacrylic acid with aliphatic alcohols having 1 to 12 carbon atoms in the alkyl radical, styrene, vinyltoluene, acrylonitrile and methacrylonitrile, hydroxyalkyl (meth)acrylates having 2 to 20 carbon atoms in the alkyl radical and dialkyl esters of $\alpha,\beta$-unsaturated aliphatic dicarboxylic acids having 1 to 20 carbon atoms in the alkyl radical and
   **A3** from 0 to 50% of mono- or polyunsaturated fatty acids having 14 to 30 carbon atoms, or their esters

   is employed as component **A,** the sum of the mass fractions of **A1, A2** and **A3** in the monomer mixture always being 100%.

5. Resins according to Claim 1, **characterized in that** component **A** is a carboxyl-containing polyester obtainable by condensation of

   **A4** dihydric aliphatic linear, branched or cyclic alcohols having 2 to 20 carbon atoms and

**A5** dibasic aliphatic or aromatic carboxylic acids.

6. Resins according to Claim 5, **characterized in that** an amount-of-substance fraction of up to 10% of component **A4** is replaced by aliphatic linear, branched or cyclic alcohols with a hydricity of three or more, having from three to 20 carbon atoms.

7. Resins according to Claim 5, **characterized in that** an amount-of-substance fraction of up to 10% of component **A5** is replaced by an aliphatic or aromatic carboxylic acid having a basicity of three or more.

8. Resins according to Claim 5, **characterized in that** the polyesters are condensed with the concomitant use of mass fractions of up to 15% of hydroxy carboxylic acids, each of which has at least one hydroxyl group and at least one carboxyl group.

9. Resins according to Claim 1, **characterized in that** component **A** is a dimer or oligomer of mono- or polyunsaturated aliphatic carboxylic acids having 6 to 30 carbon atoms.

10. Process for preparing resins according to Claim 1, **characterized in that** components **A** and **B** are reacted at a temperature of from 100 to 250°C until an acid number of from 25 to 160 mg/g is reached, a water-dilutable solvent is added if desired, and the resulting solution is neutralized in whole or in part with an aqueous solution of alkali metal hydroxides, ammonia or amines.

11. Process for preparing resins according to Claim 10, **characterized in that** the water formed during the reaction of components **A** and **B** is removed by azeotropic distillation.

12. Use of resins according to Claim 1 for preparing water-thinnable coating compositions.

13. Use of resins according to Claim 1 for preparing pigment paste resins which can be used together with aqueous binders to prepare aqueous paints.

**Revendications**

1. Résines AB diluables dans l'eau après neutralisation, avec un indice d'acide de 25 à 160 mg/g, que l'on peut obtenir par réaction des taux en masse, chaque fois par rapport à la somme des masses des substances solides dans le mélange réactionnel, de

   A au moins 30 à 90 % d'un polymère comprenant des groupes acides choisi parmi les polyesters, les acides carboxyliques aliphatiques insaturés dimérisés et oligomérisés et les polymères de monomères oléfiniques insaturés, chacun avec un indice d'acide de 30 à 240 mg/g, et
   B au moins 10 à 70% d'une résine aldéhydique ou cétonique insoluble dans l'eau, obtenue par condensation de cétones, de cétones conjointment avec des aldéhydes, de cétones sur l'urée ou d'aldéhydes sur l'urée, avec un indice d'hydroxyle de 20 à 300 mg/g, un point de ramollissement de 60 à 140°C et une masse molaire moyenne en nombre de 500 à 3000 g/mol,

   où la somme des taux en masse de A et B atteint toujours 100%.

2. Solution aqueuse ou dispersion aqueuse d'une résine selon la revendication 1, obtenue par dilution de la résine neutralisée AB avec de l'eau à un taux en masse de substance solide dans la solution aqueuse de 30 à 50%.

3. Résines selon la revendication 1, **caractérisées en ce que** l'on utilise, en tant que composant **A,** un copolymère de monomères oléfiniques insaturés contenant des groupes carboxyles, dans lequel au moins un des monomères contient des groupes carboxyles.

4. Résines selon la revendication 1, **caractérisées en ce que** l'on utilise, en tant que composant A, un copolymère de taux en masse dans le mélange de monomères de

   A1 10 à 33% d'acides carboxyliques aliphatiques $\alpha,\beta$-insaturés avec 3 à 13 atomes de carbone ou d'esters monoalkyliques d'acides dicarboxyliques aliphatiques $\alpha,\beta$-insaturés avec 1 à 20 atomes de carbone dans le reste alkyle,

A2 67 à 90% d'un ou plusieurs monomères à insaturation oléfinique qui sont dépourvus de groupes acides, choisis parmi les esters d'acide acrylique et méthacrylique d'alcools aliphatiques avec 1 à 12 atomes de carbone dans le reste alkyle, le styrène, le vinyltoluène, l'acrylo- et le méthacrylonitrile, les (méth)acrylates d'hydroxyalkyles avec 2 à 20 atomes de carbone dans le reste alkyle et les esters dialkyliques d'acides dicarboxyliques aliphatiques α,β-insaturés avec 1 à 20 atomes de carbone dans le reste alkyle, et

A3 0 à 50% d'acides gras une ou plusieurs fois insaturés avec 14 à 30 atomes de carbone ou leurs esters

où la somme des taux en masse de A1, A2 et A3 dans le mélange de monomères atteint toujours 100%.

5. Résines selon la revendication 1, **caractérisées en ce que** le composant A est un polyester contenant des groupes carboxyles, obtenu par condensation de

A4 alcools bivalents aliphatiques linéaires, ramifiés ou cycliques avec 2 à 20 atomes de carbones, et

A5 d'acides carboxyliques dibasiques aliphatiques ou aromatiques

6. Résines selon la revendication 5, **caractérisées en ce qu'**un taux jusqu'à 10% de quantité de matière du composant A4 est remplacé par des alcools aliphatiques trivalents ou d'une valence supérieure, linéaires, ramifiés ou cycliques avec 3 à 20 atomes de carbone.

7. Résines selon la revendication 5, **caractérisées en ce qu'**un taux jusqu'à 10% de quantité de matière du composant A5 est remplacé par un acide carboxylique aliphatique ou aromatique tri- ou multifonctionnel.

8. Résines selon la revendication 5, **caractérisées en ce que** l'on condense les polyesters en employant conjointement jusqu'à 15% d'acides hydroxycarboxyliques qui présentent chacun au moins un groupe hydroxyle et au moins un groupe carboxyle.

9. Résines selon la revendication 1, **caractérisées en ce que** le composant A est un dimère ou un oligomère d'acides carboxyliques aliphatiques une ou plusieurs fois insaturés avec 6 à 30 atomes de carbone.

10. Procédé pour la préparation de résines selon la revendication 1, **caractérisé en ce que** l'on fait réagir les composants A et B à une température de 100 à 250°C, jusqu'à ce qu'un indice d'acide de 25 à 160 mg/g soit atteint, le cas échéant on ajoute un solvant diluable par l'eau et on neutralise, complètement ou en partie, la solution obtenue avec une solution aqueuse d'hydroxydes alcalins, d'ammoniac ou d'amines.

11. Procédé pour la préparation de résines selon la revendication 10, **caractérisé en ce que**, lors de la réaction des composants A et B, on élimine l'eau formée par distillation azéotropique.

12. Utilisation de résines selon la revendication 1 pour la préparation d'agents de revêtement diluables par l'eau.

13. Utilisation de résines selon la revendication 1 pour la préparation de résines de pâtes pigmentaires que l'on peut utiliser ensemble avec des liants aqueux pour la préparation de vernis à l'eau.